# EUROPÄISCHE PATENTANMELDUNG

(11) **EP 4 721 553 A1**
(43) Veröffentlichungstag der Anmeldung: **08.04.2026**
(21) Anmeldenummer: 25183567.4
(22) Anmeldetag: 18.06.2025
(51) Int. Cl.: A01F 15/08, A01D 91/04, A01B 76/00

(54) **DATENSTRUKTUR, VERFAHREN ZU DEREN ERZEUGUNG UND VERWENDUNG**

(30) Priorität: 03.07.2024 DE 102024118935
(71) Anmelder: CLAAS Saulgau GmbH, 88340 Bad Saulgau (DE)
(72) Erfinder: Fischer, Josef, 88400 Biberach (DE); Becker, Michael, 88367 Hohentengen (DE); Neitemeier, Dennis, 59510 Lippetal (DE)
(74) Vertreter: CLAAS Gruppe

(57) **Zusammenfassung**

Eine Datenstruktur (21, 25, 29) umfasst eine Mehrzahl von Datensätzen, die jeweils in einem Vorgänger-Nachfolger-Verhältnis stehen. Jedem Datensatz ist eine aus einer Mehrzahl von in zwei Raumrichtungen ausgedehnten körperlichen Strukturen wie etwa eine Scheibe eines Schwads zugeordnet. Jeder Datensatz enthält geographische Koordinaten (19) eines Referenzpunktes der ihm zugeordneten körperlichen Struktur. Die zwei Raumrichtungen eines gegebenen Datensatzes stehen senkrecht auf einem Vektor, der den Referenzpunkt des gegebenen Datensatzes mit dem Referenzpunkt des Vorgängers oder Nachfolgers des gegebenen Datensatzes verbindet.

## Beschreibung

Die vorliegende Erfindung betrifft eine Datenstruktur sowie Verfahren zu deren Erzeugung und Verwendung, mit denen sich insbesondere auf dem Gebiet der Landwirtschaft Prozesse rationalisieren lassen.

Ein Schwad ist eine etablierte Schnittstelle zwischen verschiedenen Prozessschritten der Futtermittelernte. Ein Schwad - ein langgestreckter Streifen von geschnittenem Pflanzenmaterial, beiderseits flankiert von Flächen, von denen dieses Material bis auf wirtschaftlich uninteressante Reste entfernt ist - kann unmittelbar von einer Mähmaschine erzeugt werden, später von einer Ballenpresse, einem Feldhäcksler oder einer anderen das Material für den Abtransport vorbereitenden Maschine aufgenommen und der dazwischenliegenden Zeit so oft wie nötig gewendet, ausgebreitet und wieder zu einem Schwad geformt werden.

DE10 2023 119 546.8 beschreibt einen Futterernteprozess, bei dem mehrere Verarbeitungsschritte aufeinander folgen, von denen jeweils einer den Schwad aufnimmt, den der vorhergehende zurückgelassen hat. Das Ziel dieser nicht vorveröffentlichten Anmeldung ist, den Ablauf der Verarbeitungsschritte effizient zu planen und dabei Kollisionen oder Ressourcenkonflikte zu vermeiden.

Eine Voraussetzung für effiziente Planung ist, dass die Dauer eines einzelnen Verarbeitungsschritts exakt eingeschätzt werden kann. Dies ist allerdings schwierig, wenn die Eigenschaften eines Schwads nicht exakt bekannt sind. Wenn damit zu rechnen ist, dass diese sich entlang des Schwads ändern, dann darf eine Maschine, die sich am Schwad entlangbewegt, um diesen zu verarbeiten, nur so schnell fahren, dass Änderungen einer relevanten Eigenschaft des Schwads früh genug erkannt werden können, um die Verarbeitung daran anzupassen.

Anders als die Ernte etwa von Körnerfrüchten, bei der das reife Pflanzenmaterial typischerweise von ein und derselben Erntemaschine in einem durchgehenden Prozess geschnitten und gedroschen wird, und der Kornanteil umgehend geborgen wird, umfasst die Futtermittelernte zahlreiche Schritte wie Schneiden, Wenden und Schwaden, die sich über einen Zeitraum von mehreren Tagen verteilen und jeweils das Aufnehmen und Wiederauslegen des Pflanzenmaterials auf der Nutzfläche umfassen, mit der Folge, dass der Ort, an dem eine gegebene Portion des Pflanzenmaterials am Ende des Prozesses geborgen wird, eine beträchtliche Entfernung zu dem Ort aufweisen kann, an dem dasselbe Material zuvor gewachsen ist. Wenn an einer solchen Portion Pflanzenmaterial ein Mangel oder eine Abweichung von einem gewünschten Wert einer Eigenschaft beobachtet wird, ist es daher schwierig, zu beurteilen, an welchem Ort der Nutzfläche Maßnahmen getroffen werden sollten, die den Mangel in Zukunft beheben können. Werden solche Maßnahmen an einem Ort getroffen, der für den beobachteten Mangel nicht ursächlich ist, dann bleibt der beobachtete Mangel unkorrigiert, und es besteht die Gefahr, dass an anderem Ort neue hinzukommen.

Aufgabe der Erfindung ist daher, Wege aufzuzeigen, mit denen sich mehrstufige landwirtschaftliche Prozesse wie insbesondere die Futtermittelernte in ihrem Ablauf und/oder im Ressourceneinsatz rationalisieren lassen.

Die Aufgabe wird zum einen gelöst durch eine Datenstruktur mit einer Mehrzahl von Datensätzen, die jeweils in einem Vorgänger-Nachfolger-Verhältnis stehen, wobei jedem Datensatz eine aus einer Mehrzahl von in zwei Raumrichtungen ausgedehnten körperlichen Strukturen zugeordnet ist und jeder Datensatz geographische Koordinaten eines Referenzpunktes der ihm zugeordneten körperlichen Struktur enthält, und wobei die zwei Raumrichtungen eines gegebenen Datensatzes senkrecht stehen auf einem Vektor, der den Referenzpunkt des gegebenen Datensatzes mit dem Referenzpunkt des Vorgängers oder Nachfolgers des gegebenen Datensatzes verbindet. Eine solche Datenstruktur ist insbesondere geeignet, um damit einen Schwad zu beschreiben; in diesem Fall kann jede körperliche Struktur einer Scheibe des Schwads entsprechen. Indem das Vorgänger-Nachfolger-Verhältnis die Richtung abbildet, in der sich eine den Schwad verarbeitende Maschine am Schwad entlang vorarbeitet, können auf Teile des Schwads bezogene Informationen genau dann verfügbar gemacht werden, wenn diese im Laufe der Bearbeitung des Schwads zu berücksichtigen sind.

Jeder der Datensätze kann
- eine Abmessung der körperlichen Struktur in jeder der zwei Raumrichtungen, also z.B. Breite und Höhe des Schwads an dessen dem Datensatz entsprechender Stelle, und/oder
- Koordinaten von Randpunkten der körperlichen Struktur und/oder
- Koordinaten von der körperlichen Struktur zugehörigen Punkten definieren. Die Definition der Koordinaten der Randpunkte kann die Form einer Liste von Koordinaten von Randpunkten oder von Funktionen haben, die jeweils ein Stück des Randverlaufs beschreiben. Die Koordinaten der zugehörigen Punkte können insbesondere die Form einer zweidimensionalen Karte haben, aus der für einen gegebenen Punkt anhand seiner Koordinaten ablesbar ist, ob er innerhalb oder außerhalb der Grenzen der körperlichen Struktur liegt; denkbar ist auch eine Liste nur von Punkten, die innerhalb der Struktur liegen, und die für einen gegebenen Punkt erlaubt zu entscheiden, ob er innerhalb oder außerhalb der Struktur liegt, je nachdem ob sein Abstand zu einem Punkt der Liste unterhalb oder oberhalb eines Grenzwerts liegt.

Jeder der Datensätze kann ferner wenigstens eine Materialeigenschaft der körperlichen Struktur ortsaufgelöst definieren.

Diese Materialeigenschaft kann jede beliebige Eigenschaft sein, die in einem der Bearbeitungsschritte, denen das Material der Struktur unterzogen wird, gemessen werden kann bzw. die in einem dieser Bearbeitungsschritte, der auf die Messung folgt, zu berücksichtigen sein kann. Insbesondere kann sie ausgewählt sein unter einem oder mehreren von Dichte, Feuchtegehalt, Zusammensetzung, Gehalt an einem oder mehreren Nährstoffen, Gehalt an Verunreinigungen und örtlicher Herkunft des Materials.

Die Aufgabe wird ferner gelöst durch ein Verfahren zum Erzeugen der oben beschriebenen Datenstruktur, bei dem die körperlichen Strukturen von einer Maschine im Laufe einer Bewegung dieser Maschine in Richtung des Vektors erzeugt werden und jeder einer der körperlichen Struktur zugeordneten Datensätze in zeitlichem Zusammenhang mit der Erzeugung der körperlichen Struktur erzeugt wird.

Insbesondere die auf Abmessungen oder Koordinaten von Punkten einer körperlichen Struktur bezogenen Daten eines Datensatzes können gut von Sensoren der Maschine ermittelt werden, während sich diese relativ zu der körperlichen Struktur bewegt.

Des Weiteren kann das Verfahren das Aufnehmen von Material durch die Maschine, das Erfassen einer Eigenschaft des aufgenommenen Materials, das Einfügen des Materials in eine der körperlichen Strukturen und das Einfügen der erfassten Eigenschaft in den der körperlichen Struktur zugeordneten Datensatz umfassen.

Das Erfassen einer Eigenschaft kann dabei das Messen der Eigenschaft des Materials durch einen Sensor der Maschine umfassen. Alternativ kann die Eigenschaft bereits gemessen und in einem dem Material zugeordneten Datensatz verzeichnet sein; in diesem Fall kann das Erfassen der Eigenschaft darin bestehen, diese aus dem Datensatz zu lesen. So können insbesondere in dem Fall, dass das Material mehreren aufeinanderfolgenden Bearbeitungsschritten unterzogen wird, im Laufe einer ersten Bearbeitung erhaltene Messwerte in den im Laufe einer anschließenden, zweiten Bearbeitung erhaltenen Datensatz übernommen werden, ohne dass es einer erneuten Messung bedarf. Indem im Laufe von aufeinanderfolgenden Bearbeitungsschritten unterschiedliche Eigenschaften gemessen werden, kann ein Datensatz erhalten werden, in dem eine große Zahl von Messgrößen miteinander verknüpft sind.

Um den Referenzpunkt eines Datensatzes mit Bezug auf den Datensatz selber festzulegen, ist ein hoher Rechenaufwand erforderlich. Um z.B. den Flächenschwerpunkt einer Scheibe des Schwads zu ermitteln, muss erst deren Randverlauf bestimmt werden. Dieser Aufwand kann eingespart werden, indem als Referenzpunkt ein in einem auf die die körperliche Struktur erzeugenden Maschine bezogenen Koordinatensystem fester Punkt gewählt wird.

Gemäß einem weiteren Aspekt der Erfindung wird die Aufgabe gelöst durch ein Verfahren zum Verarbeiten einer langgestreckten Anordnung von körperlichen Strukturen, deren jede in einer ersten und einer zweiten Raumrichtung ausgedehnt ist und die in einer dritten Raumrichtung aufeinanderfolgend angeordnet sind, mit Hilfe einer in der dritten Raumrichtung beweglichen Maschine, mit den Schritten
a) Bereitstellen einer auf die Anordnung bezogenen Datenstruktur nach einem der vorhergehenden Ansprüche und Identifizieren eines der Datensätze der Datenstruktur als aktueller Datensatz,
b) Lesen des aktuellen Datensatzes und Platzieren der Maschine an der dem aktuellen Datensatz entsprechenden körperlichen Struktur;
c) Aufnehmen der dem aktuellen Datensatz entsprechenden körperlichen Struktur durch die Maschine;
d) Steuern der Verarbeitung der körperlichen Struktur durch die Maschine anhand des aktuellen Datensatzes;
e) Auswählen des Nachfolgers des aktuellen Datensatzes als neuer aktueller Datensatz;
f) Zurückkehren zum Schritt b).

Da das Verfahren zum Steuern der Verarbeitung einer körperlichen Struktur nicht darauf angewiesen ist, dass die Maschine der körperlichen Struktur nahe genug kommt, um an dieser für die Steuerung relevante Eigenschaften messen zu können, sondern diese aus der Datenstruktur bereits zu einem beliebigen früheren Zeitpunkt lesen kann, muss die Geschwindigkeit, mit der die Maschine entlang der Anordnung vorrückt, nicht begrenzt werden, um ein rechtzeitiges Reagieren auf eine Messung zu ermöglichen. Die für die Verarbeitung benötigte Zeit kann dadurch reduziert werde, was zum einen einen wirtschaftlicheren Betrieb der Maschine ermöglicht und zum anderen die Vermeidung von Ressourcenkonflikten mit anderen Verarbeitungsschritten eines mehrstufigen Prozesses erleichtert.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Futtermittelernteprozesses unter Beteiligung verschiedener Typen von landwirtschaftlichen Maschinen;
- Fig. 2: eine Sensoranordnung zur Schwadüberwachung und eine Scheibe eines in dem Ernteprozess erzeigten Schwads; und
- Fig. 3: die Entwicklung einer Datenstruktur, in der Daten über das geerntete Futtermittel zusammengetragen werden, im Laufe des Ernteprozesses.

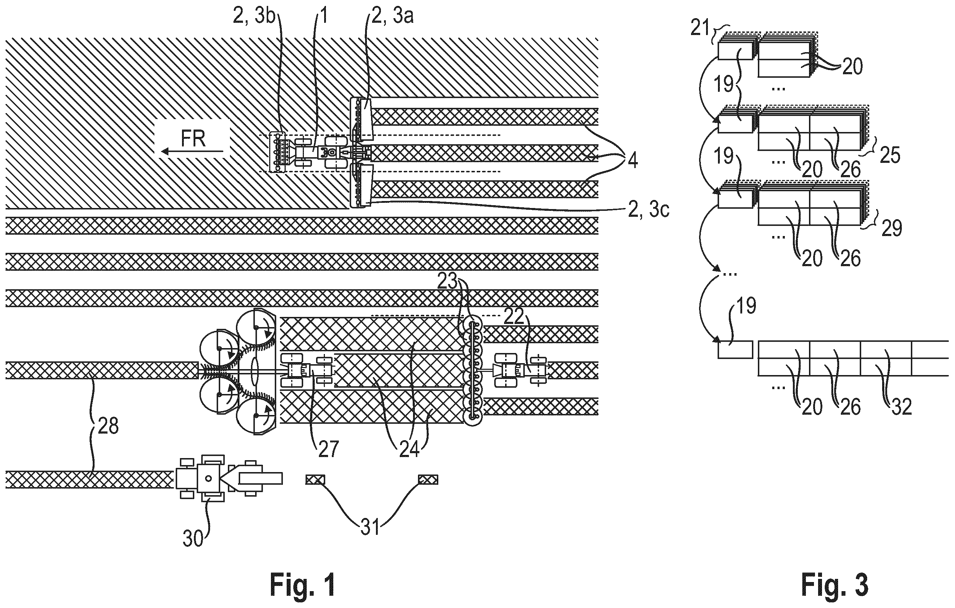

Fig. 1 zeigt in einer Draufsicht mehrere landwirtschaftliche Maschinen bei der Futtermittelernte auf einer Wiese. Der knapperen Darstellung wegen sind die Maschinen und die von ihnen durchgeführten Bearbeitungsschritte hier in einer einzigen Figur dargestellt; in der Praxis finden sie mit so großem Zeitabstand statt, dass die Maschinen normalerweise nicht gleichzeitig, sondern nur nacheinander auf einer zu beerntenden Fläche zum Einsatz kommen.

Der erste Bearbeitungsschritt ist das Mähen; die dafür eingesetzte Maschine ist ein Traktor 1 mit einem Mähvorsatz 2. Der Mähvorsatz 2 umfasst hier mehrere quer zur Fahrtrichtung FR gestaffelte Teile 3a-c, die das Mähgut schneiden und vollflächig oder, wie hier dargestellt, jeweils in Form eines in der Fahrtrichtung langgestreckten Schwads 4, auf der gemähten Fläche ablegen.

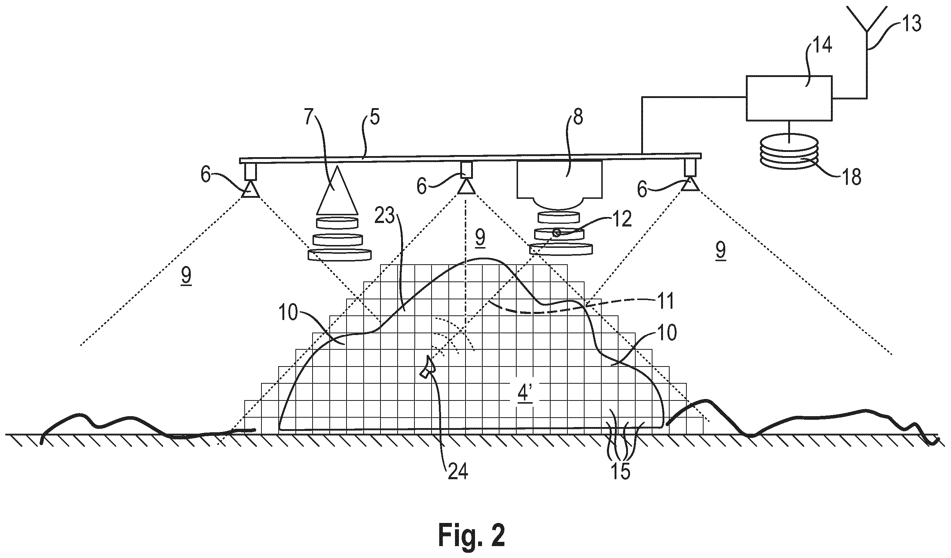

Ein Sensorbalken mit Sensoren zur Überwachung der Schwade 4 kann an der Hinterkante eines jeden der Teile 3a-c oder am Heck des Traktors 1 vorgesehen sein. Ein Sensorbalken 5 zur Überwachung eines einzelnen Schwads 4 ist in Fig. 2 schematisch dargestellt; es liegt auf der Hand, dass mehrere solcher Sensorbalken 5 miteinander kombiniert werden können, um einen Sensorbalken zur Überwachung mehrerer gleichzeitig erzeugter Schwade 4 zu bilden.

Fig. 2 zeigt drei Typen von entlang des Sensorbalkens 5 verteilten Sensoren 6, 7, 8. Die Sensoren 6 sind Kameras. Die Kameras 6 können untereinander identisch sein oder sich in ihrer spektralen Empfindlichkeit unterscheiden. Während bei dem meisten elektronischen Kameras drei Sensortypen für die Farben Rot, Grün und Blau vorgesehen sind, deren spektrale Empfindlichkeit jeweils die der Sinneszellen des menschlichen Auge nachbildet, kann wenigstens eine der Kameras 6 auch eine abweichende Zahl von Sensortypen umfassen, darunter solche, die für Spektralbereiche im Infraroten oder Ultravioletten empfindlich sind oder Sensortypen, die schmalbandig empfindlich sind für charakteristische Farbtöne eines bestimmten Bestandteils des Schwads und deren Messsignal somit einen sicheren Rückschluss auf Vorhandensein bzw. Konzentration dieses Bestandteils im Schwad 4 erlaubt.

Raumwinkelbereiche 9, in denen die Kameras 6 empfindlich sind, sind in Fig. 2 durch punktierte Linien begrenzt. Oberflächenbereiche 10 des Schwads 8, die im Überschneidungsbereich der Raumwinkelbereiche 9 von zwei Kameras 6 liegen, können prinzipiell stereoskopisch vermessen werden, allerdings macht der Aufbau des Schwads 4 aus einer Vielzahl von untereinander ähnlichen Pflanzenteilen es schwierig, ein gleiches Merkmal in den Bildern von verschiedenen Kameras 6 zu identifizieren und eine Triangulation daran vorzunehmen. Deswegen sind an dem Sensorbalken 5 ferner Sensoren verteilt, die eine Entfernungsmessung basierend auf einer Laufzeitmessung vornehmem, hier Lidar- bzw. Radarsensoren 7, 8. Der Abstand zwischen zwei Kameras 6 kann daher größer sein als bei den meisten stereoskopischen Messystemen, insbesondere kann er größer sein als der halbe Abstand der Kameras 6 vom Boden.

Da die vom Radarsensor 8 emittierte Strahlung in den Schwad 4 eindringt, kann dieser weitergehenden Aufschluss über dessen inneren Aufbau geben. Indem ein Abtaststrahl 11 des Radarsensors 8 eine Schwenkbewegung ausführt, definiert er eine Abtastebene, in der der Schwad 4 durchstrahlt wird, und damit eine Scheibe des Schwads 4, über deren Struktur das Radarecho Rückschlüsse zulässt. Diese Scheibe 4' ist in Fig. 2 gezeigt. Eine Achse 12 der Schwenkbewegung sollte in der Fahrtrichtung FR orientiert sein, damit die durchstrahlte Scheibe 4' normal zur Fahrtrichtung orientiert ist.

Eine Abtastebene des Lidarsensors 7 sollte mit der des Radarsensors übereinstimmen, damit Daten, die die beiden Sensoren 7, 8 gleichzeitig liefern, derselben Scheibe 4' des Schwads 4 zugeordnet werden können. Auch die optischen Achsen der Kameras 6 liegen vorzugsweise in dieser Abtastebene.

Die Sensoren 6, 7, 8 sowie ein Satellitennavigationssystem 13 kommunizieren mit einem Computer 14 an Bord des Traktors 2. Der Computer 14 kann im Traktor 2 fest installiert sein; es kann sich aber auch um einen mobilen Computer handeln, z.B. ein Notepad oder Smartphone, das von einem Fahrer des Traktors 2 mitgeführt wird. Der Computer 14 ist programmiert, um anhand der von den Sensoren 6, 7, 8 gelieferten Daten eine Karte von der Scheibe 4' des Schwads zu erstellen. Die Karte kann die Scheibe 4' als eine in zwei Raumrichtungen, der Vertikalen und quer zur Fahrtrichtung FR, ausgedehnte Matrix von Zellen 15 darstellen, wobei zu jeder Zelle 15 zumindest deren Position in einem zweidimensionalen Koordinatensystem und Angaben zum Inhalt der Zelle vermerkt sind. Um eine einfache Auswertung der Sensordaten zu ermöglichen, ist der Ursprung des Koordinatensystems mit den Sensoren 6, 7, 8 bzw. dem Traktor 1 beweglich; z.B. kann der Mittelpunkt der Schwenkbewegung des Abtaststrahls 11 als Koordinatenursprung gewählt sein.

Die Angaben zum Inhalt der Zelle 15 können beliebige mit Hilfe der Sensoren 6, 7, 8 erfassbare Eigenschaften des den Schwad 4 bildenden Materials umfassen, wie etwa eine Angabe darüber, ob die Zelle 15 zur Oberfläche oder zum Innern des Schwads 4 gehört, Reflektivität und Dichte des Materials am Ort der Zelle 15, der Gehalt des Materials an mittels des Lidarsensors 7 ermittelbaren Inhaltsstoffen etc. Anhand einer lokal stark abweichenden Radarreflektivität oder Dichte kann z.B. ermittelt und in der Karte verzeichnet werden, dass eine Zelle 15 einen Fremdkörper 16 wie etwa einen Stein, ein Schrottpartikel oder dergleichen enthält, dass das Material der Zelle 15 lokal vernässt ist, etc.

Während der Fahrt des Traktors 1 werden so laufend Karten von Scheiben 4' des Schwads 4 aufgenommen und jeweils zusammen mit einer Angabe über den - von dem Satellitennavigationssystem 13 gemessenen - geographischen Ort, an dem die Karte aufgenommen wurde, in einem Speicher 18 abgelegt. Als Ort der Aufnahme kann insbesondere der Ort aufgezeichnet werden, an dem sich der Ursprung des Koordinatensystems zum Zeitpunkt der Aufnahme befunden hat.

Fig. 3 zeigt in ihrer ersten Zeile schematisch einen so erhaltenen Datensatz, bestehend aus jeweils einer Ortsangabe 19, die den Entstehungsort der Karte angibt, und den Kartendaten einer Scheibe 4', mit je einem Eintrag 20 zu jeder Zelle 15 der Scheibe 4', der die zum Inhalt der Zelle ermittelten Daten zusammenfasst. Angaben zur Position der Zelle 15 können im Eintrag 20 explizit verzeichnet oder durch eine Speicheradresse des Eintrags 20 im Datensatz codiert sein.

Im Laufe des Einsatzes auf der Wiese wird so eine Datenstruktur 21 erzeugt, in der die erhaltenen Datensätze der einzelnen Scheiben 4' des Schwads 4 in der Reihenfolge ihrer Entstehung abgelegt sind. Da sich die Fahrtrichtung FR von einem Datensatz zum nächsten nicht oder, wenn der Traktor 1 eine Kurve fährt, allenfalls geringfügig ändert, stehen die zwei Raumrichtungen, in denen sich die Karte eines jeden Datensatzes erstreckt, senkrecht stehen auf einem Vektor, der die in den Angaben 19 bezeichneten Entstehungsorte dieser Karte und einer vorher oder nachher aufgenommenen Karte verbindet.

Die nächste Maschine, die den Schwad 4 bearbeitet, ist ein Wender 22 (s. Fig. 1). Dieser kann das Material des Schwads 4 breitwürfig verteilen, um eine schnellere Trocknung zu ermöglichen. Basierend auf der beim Mähen erstellten Datenstruktur 21 ist der Wender 22 in der Lage, ohne menschliche Unterstützung den Anfang des Schwads 4 und seine Laufrichtung zu ermitteln und diesem zu folgen. Da die Lage von eventuellen Fremdkörpern im Schwad 4 aus der Datenstruktur bekannt ist, kann der Wender 22 Teile des Schwads 4, von denen bekannt ist, dass sie frei von Fremdkörpern sind, zügig bearbeiten, indem er, während er den Schwad 4 abfährt, die Datensätze zu dessen Scheiben 4' der Reihe nach liest und seine Arbeitsweise dem Gelesenen anpasst. So können z.B. Bereiche, die einen Fremdkörper enthalten, von der Bearbeitung ausgenommen werden, etwa indem beim Passieren des betreffenden Bereichs ein Kreisel 23 des Wenders angehoben wird und dadurch einen Kontakt mit dem Fremdkörper vermeidet.

Der Wender 22 kann ebenfalls mit einem Sensorbalken wie oben beschrieben ausgestattet sein, um die beim Mähen durchgeführten Messungen zu überprüfen oder zu aktualisieren. Um Aufschluss über den Fortschritt der Trocknung des Materials zu gewinnen, kann es jedoch genügen, wenn die Kreisel 23 des Wenders 22 jeweils mit an sich bekannten Nabensensoren zum Messen eines auf die Kreisel 23 einwirkenden Drehmoments ausgestattet sind. Dieses Drehmoment hängt außer von der Dicke des Schwads 4 auch von seiner Dichte und damit vom Wassergehalt des enthaltenen Materials ab; da die Dicke an jedem Ort des Schwads aus der Datenstruktur bekannt ist, genügt die Kenntnis des Drehmoments, um auf den Trocknungsgrad des Materials schließen zu können.

Während des Wendens einer Scheibe des Schwads 4 berechnet der Computer 14 in Abhängigkeit von der Fahrgeschwindigkeit des Wenders 22 und der Drehzahl seiner Kreisel 23 für jede Zelle 15 des dieser Scheibe zugeordneten Datensatzes, wohin das in ihr enthaltene Material durch das Wenden verlagert wird.

Selbst wenn das Material beim Wenden so gleichmäßig ausgebreitet wird, dass für einen Betrachter keine Grenze zwischen benachbarten Schwaden erkennbar bleibt, kann das Material eines Schwads 4, nachdem es vom Wender 22 gewendet worden ist, weiterhin als Schwad, in Fig. 1 mit 24 bezeichnet, betrachtet werden, da für das gesamte ausgebreitete Material bekannt ist, aus welchem der ursprünglichen Schwade 4 es herrührt.

So wird eine zweite Datenstruktur 25 erhalten, wiederum mit einer Vielzahl von Datensätzen, von denen jeder jeweils eine quer zur Fahrtrichtung ausgedehnte Scheibe des gewendeten Schwads 24 beschreibt. In dieser Datenstruktur 25, dargestellt als zweite Zeile in Fig. 3, enthält jeder Datensatz jeweils die Ortsangabe 19 der darin beschriebenen Scheibe, sowie zu jeder Zelle 15 der Scheibe, eine Angabe 26 über den Ort, an dem sich das Material der Zelle vor dem Wenden befunden hat, sowie Angaben 20 zur Beschaffenheit des Materials der Zelle, die aus den Angaben der ersten Datenstruktur fortgeschrieben und eventuell anhand von Messungen von Sensoren des Wenders 22 aktualisiert sein können.

Die nächstfolgende Maschine ist ein Schwader 27, der hier mehrere gewendete Schwade 24 zu einem Schwad 28 zusammenführt. Wie im Falle des Wenders 22 kann der Trocknungsgrad des Materials überprüft werden; ferner wird die Verlagerung des Materials durch den Schwader 27 verfolgt, so dass nach dem Schwaden eine dritte Datenstruktur 29, wiederum mit dem gleichen Aufbau wie die zuvor beschriebenen Strukturen 21, 25, in der jeder Datensatz eine Scheibe des Schwads 28 charakterisiert, indem er zu jeder Zelle 15 der Scheibe eine Angabe 26 über den Herkunftsort des Materials der Zelle und Angaben 20 zur Beschaffenheit des Materials enthält.

Es können nach Bedarf weitere Schritte des Wendens und Schwadens folgen, an deren Ende jeweils eine neue, den aktuellen Zustand des Schwads beschreibende Datenstruktur vorliegt.

Indem in dieser Datenstruktur Angaben zur Dichte des Materials scheibenweise und entlang des Schwads aufsummiert werden, kann die Gesamtmaterialmenge und die zu dessen Bergung benötigte Transportkapazität abgeschätzt werden.

Die letzte in Fig. 1 dargestellte Maschine ist eine Ballenpresse 30, die das Material des Schwads 28 zu Ballen 31 formt. Sie nutzt die Ortsangaben in der aktuellen Datenstruktur 29 als Beschreibung einer Route, der sie folgt, um die Scheiben des Schwads 28 eine nach der anderen in einer kontinuierlichen Bewegung anzufahren und das darin enthaltene Material zu bergen. Informationen über Fremdkörper, Verunreinigungen oder andere Mängel einzelner Scheiben des Schwads 28 können herangezogen werden, um den Betrieb der Ballenpresse 30 zu steuern, z.B. um sie rechtzeitig vor Erreichen eines Fremdkörpers zu stoppen, um dessen Beseitigung zu ermöglichen, oder um die Materialaufnahme der Ballenpresse 30 zeitweilig zu unterbrechen, so dass der Fremdkörper oder ein verunreinigter Abschnitt des Schwads 28 nicht aufgenommen wird.

Die Ballenpresse 30 kann mit weiteren Sensoren, z.B. einem NIR-Sensor ausgestattet sein, um weitere Messungen von Eigenschaften des Materials, durchzuführen, insbesondere solche, die dessen Qualität als Futtermittel betreffen, und die aktuelle Datenstruktur durch die dabei erhaltenen Messwerte, in Fig. 3 symbolisiert durch Angaben 32, zu ergänzen. Da die Datenstruktur zu jeder Zelle 15 des Schwads 28 die Angabe 19 zur Herkunft des in ihr enthaltenen Materials enthält, können die an der Ballenpresse 30 erhaltenen Messergebnisse mit einem Ursprungsort verknüpft werden und als Grundlage für Entscheidungen zu Düngung, Bewässerung und anderen auf diesen Ursprungsort zugeschnittenen Pflegemassnahmen dienen.

### Bezugszeichen

- 1: Traktor
- 2: Mähvorsatz
- 3: Teil (des Mähvorsatzes)
- 4: Schwad
- 4': Scheibe
- 5: Sensorbalken
- 6: Sensor
- 7: Sensor
- 8: Sensor
- 9: Raumwinkelbereich
- 10: Oberflächenbereich
- 11: Abtaststrahl
- 12: Achse
- 13: Satellitennavigationssystem
- 14: Computer
- 15: Zelle
- 16: Fremdkörper
- 17: Beschaffenheitsangabe
- 18: Speicher
- 19: Ortsangabe
- 20: Beschaffenheitsangabe
- 21: Datenstruktur
- 22: Wender
- 23: Kreisel
- 24: Schwad
- 25: Datenstruktur
- 26: Ortsangabe
- 27: Schwader
- 28: Schwad
- 29: Datenstruktur
- 30: Ballenpresse
- 31: Ballen
- 32: Messwertangabe

## Patentansprüche

1. Datenstruktur (21, 25, 29) mit einer Mehrzahl von Datensätzen, die jeweils in einem Vorgänger-Nachfolger-Verhältnis stehen, wobei jedem Datensatz eine aus einer Mehrzahl von in zwei Raumrichtungen ausgedehnten körperlichen Strukturen zugeordnet ist und jeder Datensatz geographische Koordinaten (19) eines Referenzpunktes der ihm zugeordneten körperlichen Struktur enthält, und wobei die zwei Raumrichtungen eines gegebenen Datensatzes senkrecht stehen auf einem Vektor, der den Referenzpunkt des gegebenen Datensatzes mit dem Referenzpunkt des Vorgängers oder Nachfolgers des gegebenen Datensatzes verbindet.

2. Datenstruktur nach Anspruch 1, bei der die körperliche Struktur eine Scheibe (4') eines Schwads (4, 24, 28) ist.

3. Datenstruktur nach einem der vorhergehenden Ansprüche, bei der jeder der Datensätze
- eine Abmessung der körperlichen Struktur in jeder der zwei Raumrichtungen und/oder
- Koordinaten (20) von Randpunkten der körperlichen Struktur und/oder
- Koordinaten (20) von der körperlichen Struktur zugehörigen Punkten
definiert.

4. Datenstruktur nach einem der vorhergehenden Ansprüche, bei der jeder der Datensätze in einem Eintrag (20, 32) wenigstens eine Materialeigenschaft der körperlichen Struktur ortsaufgelöst definiert.

5. Datenstruktur nach Anspruch 4, bei der die Materialeigenschaft ausgewählt ist unter einem oder mehreren von Dichte, Feuchtegehalt, Zusammensetzung, Gehalt an einem oder mehreren Nährstoffen, Gehalt an Verunreinigungen und örtlicher Herkunft des Materials.

6. Verfahren zum Erzeugen der Datenstruktur nach einem der vorhergehenden Ansprüche, bei dem die körperlichen Strukturen (4') von einer Maschine (1, 22, 27) im Laufe einer Bewegung in Richtung des Vektors erzeugt werden und der jeder körperlichen Struktur (4') zugeordnete Datensatz in zeitlichem Zusammenhang mit der Erzeugung der körperlichen Struktur erzeugt wird.

7. Verfahren nach Anspruch 6, das das Aufnehmen von Material durch die Maschine (1, 22, 27), das Erfassen einer Eigenschaft des aufgenommenen Materials, das Einfügen des Materials in eine der körperlichen Strukturen und das Einfügen der erfassten Eigenschaft in den der körperlichen Struktur zugeordneten Datensatz umfasst.

8. Verfahren nach Anspruch 7, bei dem das Erfassen das Messen der Eigenschaft des Materials durch einen Sensor der Maschine (1, 22, 27) oder das Lesen der Eigenschaft aus einem dem Material zugeordneten Datensatz, insbesondere einem Datensatz einer zweiten Datenstruktur (21, 25) nach einem der Ansprüche 1 bis 5, umfasst.

9. Verfahren nach Anspruch 6, 7 oder 8, bei dem der Referenzpunkt ein in einem auf die Maschine (1, 22, 27) bezogenen Koordinatensystem fester Punkt (12) ist.

10. Verfahren zum Verarbeiten einer langgestreckten Anordnung (4, 24, 28) von körperlichen Strukturen (4'), deren jede in einer ersten und einer zweiten Raumrichtung ausgedehnt ist, und die in einer dritten Raumrichtung aufeinanderfolgend angeordnet sind, mit Hilfe einer in der dritten Raumrichtung beweglichen Maschine (22, 27, 30), mit den Schritten
a) Bereitstellen einer auf die Anordnung (4, 24, 28) bezogenen Datenstruktur (1, 22,27) nach einem der vorhergehenden Ansprüche und Identifizieren eines der Datensätze der Datenstruktur (1, 22,27) als aktueller Datensatz,
b) Lesen des aktuellen Datensatzes und Platzieren der Maschine (22, 27, 30) an der dem aktuellen Datensatz entsprechenden körperlichen Struktur;
c) Aufnehmen der dem aktuellen Datensatz entsprechenden körperlichen Struktur durch die Maschine (22, 27, 30);
d) Steuern der Verarbeitung der körperlichen Struktur durch die Maschine (22, 27, 30) anhand des aktuellen Datensatzes;
e) Auswählen des Nachfolgers des aktuellen Datensatzes als neuer aktueller Datensatz;
f) Zurückkehren zum Schritt b).
